# FASCICULE DE BREVET EUROPEEN

(11) **EP 3 410 901 B1**
(45) Date de publication et mention de la délivrance du brevet: **13.11.2019**
(21) Numéro de dépôt: 17707624.7
(22) Date de dépôt: 02.02.2017
(51) Int. Cl.: A47J 31/36

(54) **MACHINE DE DISTRIBUTION DE BOISSONS AVEC UN RECEPTACLE DE POD PIVOTANT A 180° EN SENS HORAIRE ET ANTIHORAIRE**
GETRÄNKEAUSGABEAUTOMAT MIT EINEM KAPSELBEHÄLTER MIT SCHWENKUNG IM UND GEGEN DEN UHRZEIGERSINN UM 180°
BEVERAGE DISPENSING MACHINE COMPRISING A POD CONTAINER THAT CAN PIVOT CLOCKWISE AND ANTI-CLOCKWISE THROUGH 180°

(30) Priorité: 04.02.2016 FR 1650912
(43) Date de publication de la demande: 12.12.2018
(73) Titulaire: SEB S.A., 69130 Ecully (FR)
(72) Inventeur: DOS SANTOS, Quentin, 21000 Dijon (FR); RIVA, Arnaud, 21000 Dijon (FR); BRIERE, Matthieu, 21120 Gemeaux (FR)
(74) Mandataire: Bourrières, Patrice
(86) Numéro de dépôt international: PCT/FR2017/050242
(87) Numéro de publication internationale: WO 2017/134395

(56) Documents cités:
- EP-A2- 1 195 121
- US-A1- 2008 038 441
- US-A1- 2010 178 404

## Description

### Domaine technique

La présente invention concerne une machine de distribution de boissons à partir d'un pod. Elle a pour objectif principal de faciliter la manipulation de la machine lors de la mise en place du pod dans un réceptacle de cette machine puis lors de son retrait.

On entend par « pod » une capsule qui comprend une ou plusieurs chambres contenant chacune un ingrédient entrant dans la composition de la boisson, les ingrédients étant destinés à être mélangés avec de l'eau lors de la préparation de la boisson.

Dans une réalisation particulière, et non limitative, le pod est constitué d'une capsule comprenant une ou plusieurs chambres de stockage contenant chacune un ingrédient, notamment liquide, un canal permettant la distribution d'eau, et une chambre de mélange. Le pod est configuré pour séparer la chambre de mélange de l'au moins une chambre de stockage et du canal, dans un mode initial, et pour faire communiquer la chambre de mélange avec l'au moins une chambre et avec le canal, dans un mode de préparation de la boisson. En outre, la machine comprend des moyens d'injection d'air et des moyens d'injection d'eau, configurés pour perforer le pod et pour injecter de l'air et de l'eau respectivement dans l'au moins une chambre de stockage et dans le canal, dans le mode de préparation de la boisson. Dans ce mode de préparation, l'air injecté dans l'au moins une chambre de stockage pousse l'au moins un ingrédient dans la chambre de mélange et, concomitamment, l'eau injectée dans le canal est transférée dans ladite chambre de mélange, ce qui permet le mélange du ou des ingrédients avec l'eau avant le déversement de la boisson dans un récipient, par exemple un verre ou un gobelet.

### Etat de la technique

Il est connu les demandes de brevet ou brevets publiés sous les numéros US4829889, EP1635680, EP1996051 et EP2564736, qui divulguent des machines de distribution de boissons à partir d'un pod.

Selon cet art antérieur, la machine de distribution de boissons comprend un châssis, un réceptacle comportant une zone de réception du pod, et un dispositif d'ouverture/fermeture agencé entre le châssis et le réceptacle pour pivoter ledit réceptacle, entre une position fermée permettant la distribution de boisson et une position ouverte permettant l'accès à la zone de réception du pod.

Dans les documents US4829889 et EP2564736, le dispositif d'ouverture/fermeture permet le pivotement du réceptacle selon un axe vertical. Au contraire, dans les documents EP1635680 et EP1996051, le dispositif d'ouverture/fermeture permet le pivotement du réceptacle selon un axe horizontal.

### Résumé de l'invention

La présente invention a pour objectif de mettre en œuvre une machine de distribution de boissons à partir d'un pod présentant les caractéristiques précitées de l'art antérieur, avec un dispositif d'ouverture/fermeture configuré pour pivoter le réceptacle selon un premier axe vertical par rapport au châssis, qui est ergonomique et adapté à tout utilisateur, et qui permet un meilleur accès au réceptacle.

A cet effet, selon l'invention, le dispositif d'ouverture/fermeture est configuré pour que le réceptacle comporte une course angulaire de 180° pour passer de la position fermée à la position ouverte et inversement, le sens de la rotation pouvant être horaire ou antihoraire, au choix de l'utilisateur. Ainsi, le réceptacle peut être dégagé complètement à l'avant de la machine, vis-à-vis du châssis, de sorte à permettre l'accès convenable à la zone de réception du pod lors de l'insertion ou du retrait dudit pod. En outre, le réceptacle peut être manipulé aisément tant par les utilisateurs gauchers que par les utilisateurs droitiers, qui peuvent pivoter ledit réceptacle dans le sens horaire ou antihoraire lors de la fermeture.

Dans une réalisation préférentielle de la machine selon l'invention, le dispositif d'ouverture/fermeture comprend un système d'orientation de l'ouverture du réceptacle configuré pour ouvrir le réceptacle dans le sens inverse de celui de la fermeture qui précède. On pourrait cependant envisager des variantes de machines sur lesquelles le dispositif d'ouverture/fermeture permet d'ouvrir le réceptacle indépendamment du sens de fermeture précédent l'ouverture.

Selon cette réalisation préférentielle, le système d'orientation est configuré pour arrêter le pivotement du réceptacle lorsqu'il atteint la position fermée, ledit système d'orientation comportant une butée agencée sur le châssis et un organe d'arrêt agencé sur le réceptacle. Cela permet de définir précisément la position de fermeture afin d'assurer le bon fonctionnement de la machine durant la distribution de la boisson. De préférence, l'organe d'arrêt du réceptacle comporte une nervure verticale agencée sur un axe de rotation du réceptacle. De préférence, la butée est formée par un nez d'une gâchette mobile en rotation de part et d'autre d'une position moyenne à l'encontre de deux ressorts.

Dans une réalisation préférentielle de la machine selon l'invention, le dispositif d'ouverture/fermeture comprend un système d'assistance à l'ouverture configuré pour amener le réceptacle de la position fermée à la position ouverte, par une rotation à 180°. Cela permet d'ouvrir de manière précise le réceptacle sans aucune manipulation de celui-ci par l'utilisateur.

Selon cette réalisation préférentielle, le système d'assistance à l'ouverture comporte un organe d'appui qui coopère avec une platine assujettie au réceptacle et agencée selon l'axe vertical de rotation dudit réceptacle. En outre, la platine comprend au moins une rampe sur laquelle prend appui ledit organe d'appui, de sorte que l'effort exercé par l'organe d'appui sur l'au moins une rampe entraîne la rotation de la platine dans au moins un sens selon l'axe vertical. De préférence, l'organe d'appui coopère avec un logement agencé sur le réceptacle pour maintenir le réceptacle en position ouverte. De préférence, l'organe d'appui comporte un galet, limitant les frottements sur la platine.

Avantageusement, la machine comporte un système de verrouillage/déverrouillage configuré pour maintenir le réceptacle en position fermée vis-à-vis du châssis et, inversement, pour libérer le réceptacle de sorte à permettre son pivotement en position ouverte.

Dans une réalisation préférentielle, le système de verrouillage/déverrouillage comporte, sur le châssis, un verrou mobile et des moyens de commande du verrou et, sur le réceptacle, un logement configuré pour recevoir le verrou dans la position fermée. De préférence, les moyens de commande comportent une bielle assujettie au verrou, un bouton de commande de la bielle et un élément de rappel du verrou en position de maintien du réceptacle.

Dans une réalisation préférentielle, la machine comprend un système d'impulsion configuré pour forcer le pivotement du réceptacle lorsqu'il est libéré par ledit système de verrouillage/déverrouillage. Cela permet de dégager le réceptacle de sa position fermée, afin d'effectuer ensuite son ouverture complète à 180°.

Avantageusement, la machine comprend un système de détection configuré pour détecter la présence d'un pod dans le réceptacle lorsque ledit réceptacle est en position fermée. Cela permet de déclencher la distribution de la boisson uniquement en la présence d'un pod. Dans une réalisation préférentielle, le réceptacle comporte une fente verticale communiquant avec la zone de réception du pod. En outre, le système de détection comporte un capteur de présence et des moyens de déplacement du capteur de présence configurés pour déplacer ledit capteur soit dans une position dégagée de la fente lors de l'amorce de l'ouverture ou de la fermeture du réceptacle, soit dans une position engagée dans la fente lorsque le réceptacle a atteint sa position fermée.

Avantageusement, la machine comprend des moyens de reprise des efforts agencés entre le châssis et le réceptacle, configurés pour stabiliser le réceptacle en cours de fonctionnement de la machine. De préférence, les moyens de reprise des efforts comprennent au moins un épaulement sur le réceptacle et au moins une patte d'appui sur le châssis, ledit épaulement reposant sur ladite patte d'appui dans la position fermée.

Dans une réalisation de la machine selon l'invention, le réceptacle comprend des moyens de préhension du pod en position dans la zone de réception. Cela facilite la manipulation du pod.

Dans une réalisation de la machine selon l'invention, le réceptacle comprend une pièce de support du pod configurée pour être positionnée dans la zone de réception du pod et pour recevoir ledit pod, ladite pièce de support étant amovible. Cela facilite le nettoyage de la machine.

Avantageusement, la machine comprend un support d'aiguilles de distribution de fluides, un système de déplacement du support d'aiguilles d'une position dégagée du pod à une position engagée sur le pod, et un système de blocage du système de déplacement configuré pour maintenir le support d'aiguilles en position dégagée du pod tant que le réceptacle n'est pas revenu en position fermée. Cela évite l'endommagement du support d'aiguilles durant la manipulation du réceptacle.

### Brève description des figures

La description suivante met en évidence les caractéristiques et avantages de la machine de distribution de boissons objet de l'invention, selon une conception préférentielle et non limitative. Cette description s'appuie sur des figures, parmi lesquelles :
- les figures 1 et 2 illustrent deux vues d'ensemble d'une partie de la machine de distribution comportant les caractéristiques essentielles en rapport avec l'invention, notamment le réceptacle qui reçoit le pod, le dispositif d'ouverture/fermeture du réceptacle, le support d'aiguilles de distribution de fluides et le système de déplacement du support d'aiguilles, le réceptacle étant respectivement en position fermée et en position ouverte vis-à-vis du châssis ;
- la figure 3 illustre une vue d'ensemble mettant notamment en évidence la conception du réceptacle, lequel est en position ouverte ;
- la figure 4 illustre une vue d'ensemble mettant en évidence le dispositif d'ouverture/fermeture du réceptacle et le système de déplacement du support d'aiguilles, dans la position ouverte du réceptacle ;
- les figures 5 et 6 illustrent deux vues d'ensemble mettant en évidence le système d'orientation de l'ouverture du réceptacle et le système d'assistance à l'ouverture dudit réceptacle, dans la position ouverte du réceptacle ;
- la figure 7 illustre une vue d'ensemble mettant notamment en évidence le système de déplacement du support d'aiguilles ;
- les figures 8 et 9 illustrent deux vues d'ensemble mettant notamment en évidence le dispositif de verrouillage/déverrouillage du réceptacle, en position de déverrouillage ;
- les figures 10 et 11 illustrent deux vues d'ensemble mettant en évidence le dispositif d'ouverture/fermeture du réceptacle et le système de déplacement du support d'aiguilles, dans la position fermée du réceptacle et dans la position dégagée du support d'aiguilles ;
- la figure 12 illustre une vue d'ensemble mettant en évidence le système d'orientation de l'ouverture du réceptacle et le système d'assistance à l'ouverture dudit réceptacle, dans la position fermée du réceptacle ;
- les figures 13 et 14 illustrent deux vues d'ensemble mettant notamment en évidence le dispositif de verrouillage/déverrouillage du réceptacle, en position de verrouillage ;
- la figure 15 illustre une vue d'ensemble mettant en évidence des éléments du dispositif d'ouverture/fermeture et du système de déplacement du support d'aiguilles, avec le réceptacle en position fermée ;
- la figure 16 illustre une vue d'ensemble mettant notamment en évidence le système de déplacement du support d'aiguilles avec le support d'aiguilles en position dégagée, et le système de verrouillage/déverrouillage du réceptacle en position de verrouillage ;
- les figures 17 et 18 illustrent deux vues d'ensemble mettant en évidence une rampe sur le système de déplacement du support d'aiguilles respectivement en position dégagée et en position engagée ;
- les figures 19 et 20 illustrent deux vues d'ensemble mettant notamment en évidence le système de déplacement du support d'aiguilles en position engagée ;
- la figure 21 illustre une vue d'ensemble mettant en évidence une molette du système de déplacement du support d'aiguilles, dans la position engagée ;
- les figures 22 à 27 mettent en évidence un mode de conception d'un pod ;
- la figure 28 illustre un mode de réalisation des aiguilles.

### Description détaillée

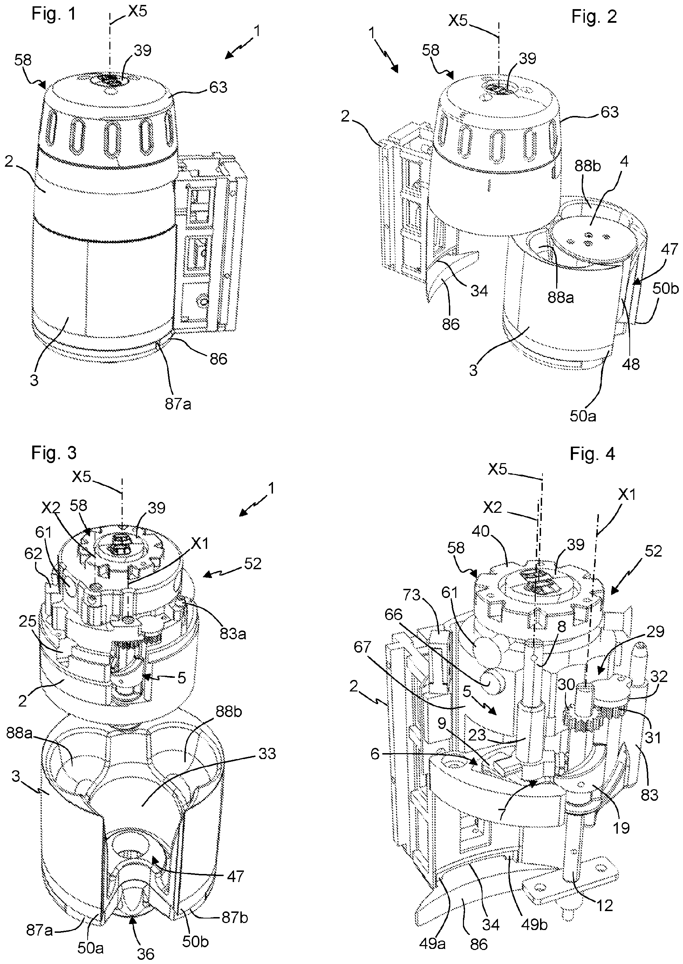

Les figures 1 et 2 illustrent uniquement les parties la machine 1 de distribution mettant en œuvre l'invention. Cette machine 1 comprend d'autres caractéristiques telles qu'un dispositif d'alimentation en fluides et un système de gestion de l'activation de ce dispositif d'alimentation en fluides, lesquels ne sont pas détaillés ci-après, n'étant pas essentiels à la mise en œuvre de l'invention.

La machine 1 comprend un châssis 2 et un réceptacle 3. Le réceptacle 3 permet la réception d'un pod 4. Ce réceptacle 3 est monté en liaison pivot par rapport au châssis 2, selon un premier axe vertical X1 illustré notamment en figures 3 et 4. Le réceptacle 3 peut pivoter d'une position fermée illustrée en figure 1, vers une position ouverte illustrée en figure 2, en effectuant une rotation de 180° selon cet axe vertical X1. Et inversement. Par ailleurs, le sens de la rotation peut être horaire ou antihoraire, au choix de l'utilisateur, comme cela apparaîtra plus en détail ci-après. Pour cela, la machine 1 comprend un dispositif d'ouverture/fermeture 5 agencé entre le châssis 2 et le réceptacle 3, comme illustré par exemple en figures 3, 4, 10, 11, 15 et 19.

Ce dispositif d'ouverture/fermeture 5 comprend un système d'orientation 6 de l'ouverture du réceptacle 3 et un système d'assistance 7 à l'ouverture, illustrés notamment en figures 4, 5, 6, 11 et 12. Le système d'orientation 6 permet d'ouvrir le réceptacle 3 dans le sens inverse de celui de la fermeture qui précède. Le système d'assistance 7 permet d'amener le réceptacle 3 de la position fermée à la position ouverte par un mouvement de rotation à 180°, sans manipulation de la part de l'utilisateur.

Le système d'orientation 6 comprend une tige 8 agencée selon un second axe vertical X2, de manière fixe vis-à-vis du châssis 2. Cette tige 8 reçoit une gâchette 9 montée à pivotement selon le second axe vertical X2 et logée dans un quartier creux 10 d'une pièce 11 qui est fixée au châssis 2. Ainsi, le pivotement de la gâchette 9 selon l'axe vertical X2 est limité par les bords latéraux 10a, 10b du quartier creux 10.

Le système d'assistance 7 comprend un axe 12 agencé selon le premier axe vertical X1. Cet axe 12 est monté en liaison pivot par rapport au châssis 2 selon l'axe vertical X1, et il est assujetti au réceptacle 3. Le système d'orientation 6 comprend une nervure verticale 13 agencée sur l'axe 12 et configurée pour venir en appui contre un nez 14 de la gâchette 9 lors de la rotation de l'axe 12.

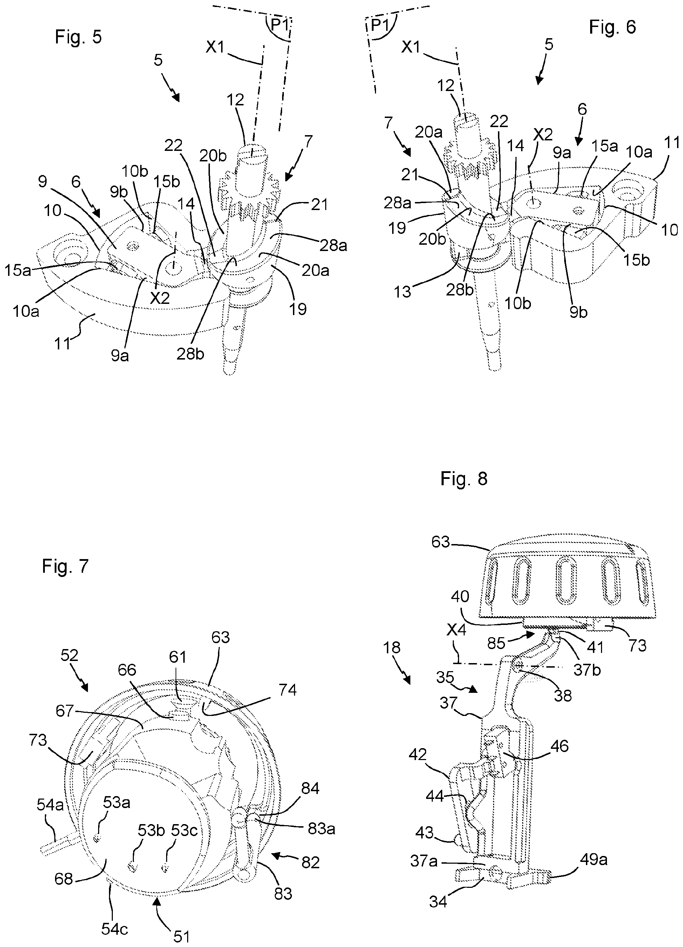

Deux ressorts 15a, 15b, schématisés par des portions de cylindres, sont agencés entre les côtés latéraux 9a, 9b de la gâchette 9 et les bords latéraux 10a, 10b du quartier creux 10, comme l'illustrent notamment les figures 5, 6 et 12. Lorsque le réceptacle 3 est en position ouverte, la nervure verticale 13 est dégagée à l'opposé du nez 14 de la gâchette 9 qui est en position moyenne d'équilibre dans le quartier 10, comme l'illustrent notamment les figures 5 et 6.

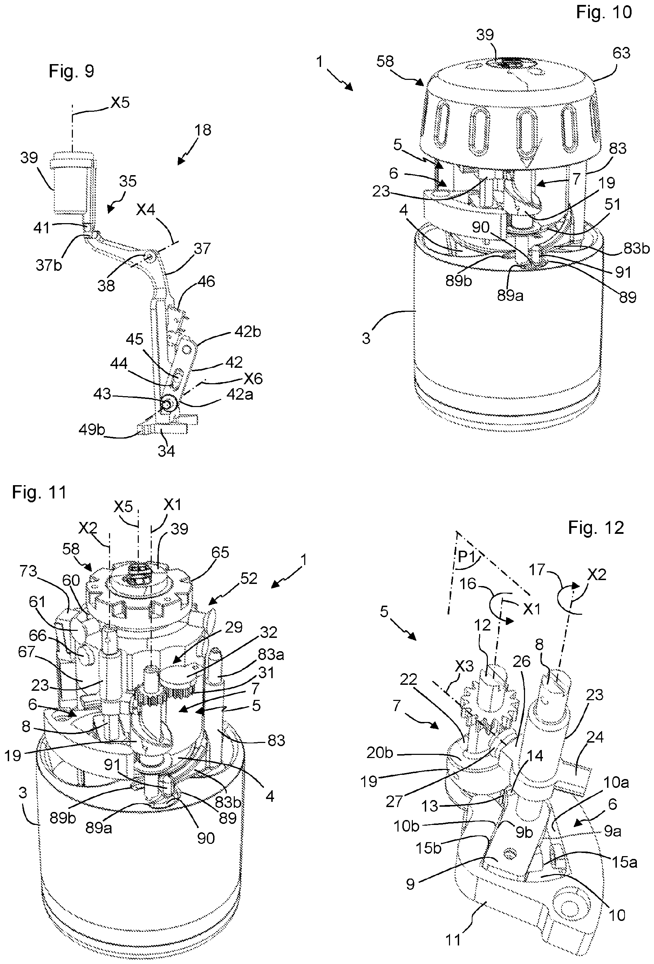

Lors de la fermeture du réceptacle 3 en effectuant une rotation dans le sens antihoraire illustré par la flèche 16 sur la figure 12, l'axe 12 et la nervure verticale 13 tournent selon l'axe vertical X1, ladite nervure verticale 13 venant alors en appui contre le nez 14, ce qui provoque la rotation de la gâchette 9 dans le sens horaire illustré par la flèche 17 sur la figure 12. Le ressort 15b se comprime jusqu'à ce que le côté latéral 9b de la gâchette 9 vienne en butée contre le bord latéral 10b du quartier creux 10, ce qui arrête la rotation du réceptacle 3 dans une position précise de fermeture illustrée en figure 1. Le principe de fonctionnement reste le même et est inversé lorsque le réceptacle 3 est fermé en le tournant dans le sens horaire selon l'axe vertical X1, dans quel cas le côté latéral 9a de la gâchette 9 tourne dans le sens antihoraire et vient en butée contre le bord latéral 10a du quartier creux 10, le ressort 15a étant dans ce cas comprimé. La position d'arrêt de la nervure verticale 13 reste identique lorsqu'elle est en butée sur le nez 14 de la gâchette 9, que le réceptacle 3 soit tourné à 180° dans le sens horaire ou antihoraire lors de la fermeture. Par ailleurs, la présence de cette gâchette 9 venant en butée contre l'un ou l'autre des bords latéraux 10a, 10b du quartier creux 10, en position fermée, impose de procéder à l'ouverture du réceptacle 3 dans le sens inverse à celui de la fermeture qui vient d'être réalisée.

Un système de verrouillage/déverrouillage 18 permet de maintenir le réceptacle 3 en position fermée vis-à-vis du châssis 2 et, inversement, de libérer le réceptacle 3 de sorte à permettre son pivotement en position ouverte. Ce système de verrouillage/déverrouillage 18 sera décrit plus en détail ci-après. Lors du déverrouillage, la libération du réceptacle 3 permet au ressort 15a, 15b qui est à l'état comprimé, de se détendre et de pousser la gâchette 9 pour la faire pivoter dans le sens inverse au sens de la fermeture qui précède. Le nez 14 appuie alors contre la nervure verticale 13, ce qui force l'axe 12 à tourner dans le sens inverse à celui de la fermeture qui précède, permettant ainsi de donner une impulsion au réceptacle 3 et de le dégager de la position de fermeture.

Le système d'assistance 7 comprend une platine 19 assujettie à l'axe 12, cette platine 19 comportant deux rampes 20a, 20b agencées symétriquement par rapport à un plan vertical P1 passant par l'axe vertical X1, comme illustré en figures 5, 6 et 12. Ces rampes 20a, 20b sont inclinées et forment un sommet 21 et un logement 22 à l'opposé dudit sommet 21. Le système d'assistance 7 comprend en outre un organe d'appui 23 de la forme d'un cylindre creux monté à coulissement sur la tige 8 selon le second axe vertical X2. Cet organe d'appui 23 comprend une patte 24 qui est disposée dans un logement 25, comme l'illustrent par exemple les figures 3, 4 et 15. Ce logement 25 assure un blocage en rotation de la patte 24, et ainsi le montage en translation de l'organe d'appui 23 selon l'axe vertical X2. Cet organe d'appui 23 comprend un doigt 26 muni d'un galet 27 monté en rotation selon un axe horizontal X3. Ce galet 27 prend appui sur l'une ou l'autre des rampes 20a, 20b de la platine 19, selon le sens de rotation du réceptacle 3. Un ressort (non illustré) est agencé sur la tige 8 selon l'axe X2 pour exercer une force de rappel vers le bas sur l'organe d'appui 19, ce qui contraint ledit réceptacle 3 à tourner de la position fermée vers la position ouverte, une fois ledit réceptacle 3 libéré par le dispositif de verrouillage/déverrouillage 18. Dans la position fermée, le galet 27 se situe au niveau du sommet 21 sur la platine 19, dans une position d'équilibre. L'impulsion donnée par le système d'impulsion constitué des ressorts 15a, 15b, de la gâchette 9 et de la nervure verticale 13, permet d'engager le galet 27 sur l'une ou l'autre des rampes 20a, 20b selon le sens de rotation, le système d'assistance 7 assurant ensuite l'ouverture complète du réceptacle 3. En position ouverte, le galet 27 est positionné dans le logement 22 sur la platine 19, ce qui assure un maintien convenable et stable du réceptacle 3 dans cette position ouverte.

Tel qu'illustré sur les figures 5, 6 et 12, les rampes 20a, 20b sur la platine 19 comportent chacune au moins deux zones de pentes différentes 28a, 28b permettant d'appliquer deux couples de rotation sur le réceptacle 3 durant son ouverture. Cela permet de réduire les efforts sur le réceptacle 3 en fin d'ouverture de celui-ci. En outre, la machine 1 comprend un système d'amortisseur 29, illustré par exemple en figures 4 et 11, configuré pour amortir le réceptacle 3 lors de sa rotation en position ouverte. Le système d'amortisseur 29 comprend un pignon 30 assujetti à l'axe 12, qui engrène avec une roue dentée 31 assujettie à un amortisseur à huile 32.

La machine 1 comprend un système de verrouillage/déverrouillage 18, illustré notamment en figures 2, 3, 4, 8, 9, 13, 14, 15 et 20, qui permet de maintenir le réceptacle 3 en position fermée vis-à-vis du châssis 2, position dans laquelle la distribution de la boisson peut être réalisée en la présence d'un pod 4 dans une zone de réception 33 dudit réceptacle 3. Le système de verrouillage/déverrouillage 18 comporte un verrou 34 mobile, des moyens de commande 35 du verrou 34, agencés sur le châssis 2, et un logement 36 agencé sur le réceptacle 3, ce logement 36 étant configuré pour recevoir le verrou 34 dans la position fermée du réceptacle 3. Les moyens de commande 35 comportent une bielle 37 dont l'extrémité inférieure 37a est assujettie au verrou 34. La bielle 37 est montée en liaison pivot 38 selon un axe horizontal X4 par rapport au châssis 2. Les moyens de commande 35 comprennent également un bouton de commande 39 monté en translation selon un axe vertical X5 vis-à-vis d'un corps 40. Ce bouton de commande 39 comprend un doigt 41 qui vient en appui sur l'extrémité supérieure 37b de la bielle 37, comme l'illustre la figure 9, dans une position déterminée dudit corps 40, comme cela sera précisé ci-après. Ce doigt 41 est agencé verticalement et désaxé par rapport à l'axe vertical X5 de translation du bouton de commande 39. Une pression sur le bouton de commande 39 permet de descendre le doigt 41 qui appuie sur l'extrémité supérieure 37b de la bielle 37, permettant son pivotement selon l'axe horizontal X4 et, ainsi, le dégagement du verrou 34 hors du logement 36 sur le réceptacle 3, ce qui autorise le pivotement du réceptacle 3 en position ouverte, comme expliqué précédemment. En outre, les moyens de commande 35 comprennent un élément de rappel (non illustré) du verrou 34, du type ressort, qui exerce une force sur le verrou 34 ou/et sur la bielle 37 de sorte à assurer le retour dudit verrou 34 en position de maintien du réceptacle 3.

Tel qu'illustré notamment en regard des figures 2, 3, 4, 8, 9, 13, 14, 16 et 20, une seconde bielle 42 a son extrémité inférieure 42a qui est montée en liaison pivot 43 selon un axe horizontal X6, vis-à-vis du châssis 2. La seconde bielle 42 comprend une lumière 44 s'étendant sur une partie de sa longueur, cette lumière 44 recevant un tenon 45 agencé sur la première bielle 37 assujettie au verrou 34. Un capteur de présence 46, par exemple de type capteur à lamelle, est assujetti à l'extrémité supérieure 42b de la seconde bielle 42. Lors d'une pression sur le bouton de commande 39, l'extrémité inférieure 37a de la première bielle 37 pivote vers l'arrière selon l'axe horizontal X4. Le tenon 45 exerce alors une force sur la seconde bielle 42, permettant le pivotement vers l'arrière du capteur de présence 46 selon l'axe horizontal X6. Lorsque la pression sur le bouton de commande 39 cesse, l'élément de rappel du verrou 34 agit de manière inverse sur la première bielle 37, agissant elle-même sur la seconde bielle 42, ce qui assure le pivotement vers l'avant du capteur de présence 46. Le réceptacle 3 comprend une fente 47 permettant de laisser apparaître une partie du contour 48 du pod 4, en la présence de celui-ci dans la zone de réception 33, comme l'illustrent notamment les figures 2, 3 et 16. Lorsque le capteur de présence 46 est pivoté vers l'arrière, celui-ci est dégagée de la fente 47, ce qui permet de pivoter le réceptacle 3 sans interférer sur le capteur de présence 46. Inversement, lorsque le capteur de présence 46 est pivoté vers l'avant, celui-ci pénètre dans la fente 47 et peut entrer en contact avec la paroi 48 du pod 4 ou venir à proximité de celle-ci, ce qui permet de détecter la présence dudit pod 4 dans la zone de réception 33 du réceptacle 3. Le verrou 34 comprend deux dents 49a, 49b légèrement biseautées qui viennent respectivement en butée contre deux points de contact 50a, 50b sur le réceptacle 3, lors du pivotement dudit réceptacle 3 en position fermée, dans le sens horaire ou, inversement, dans le sens antihoraire. Ainsi, lors de la fermeture du réceptacle 3 en le pivotant dans le sens horaire, le premier point de contact 50a bute contre la première dent 49a. Inversement, lors de la fermeture du réceptacle 3 en le pivotant dans le sens antihoraire, le second point de contact 50b bute contre la seconde dent 49b. La forme biseautée des dents 49a, 49b et la forme circulaire du réceptacle 3 permettent de pousser vers l'arrière le verrou 34 tout en laissant glisser le réceptacle 3 jusque dans sa position fermée. Le déplacement du verrou 34 vers l'arrière assure concomitamment le déplacement du capteur de présence 46, par le biais des bielles 37, 42, ce qui évite tout interférence entre le capteur de présence 46 et le réceptacle 3 durant la fermeture. Une fois le réceptacle 3 en position fermée, l'élément de rappel (non illustré) assure le retour en position du verrou 34 dans le logement 36, et celui du capteur de présence 46 dans la fente 47.

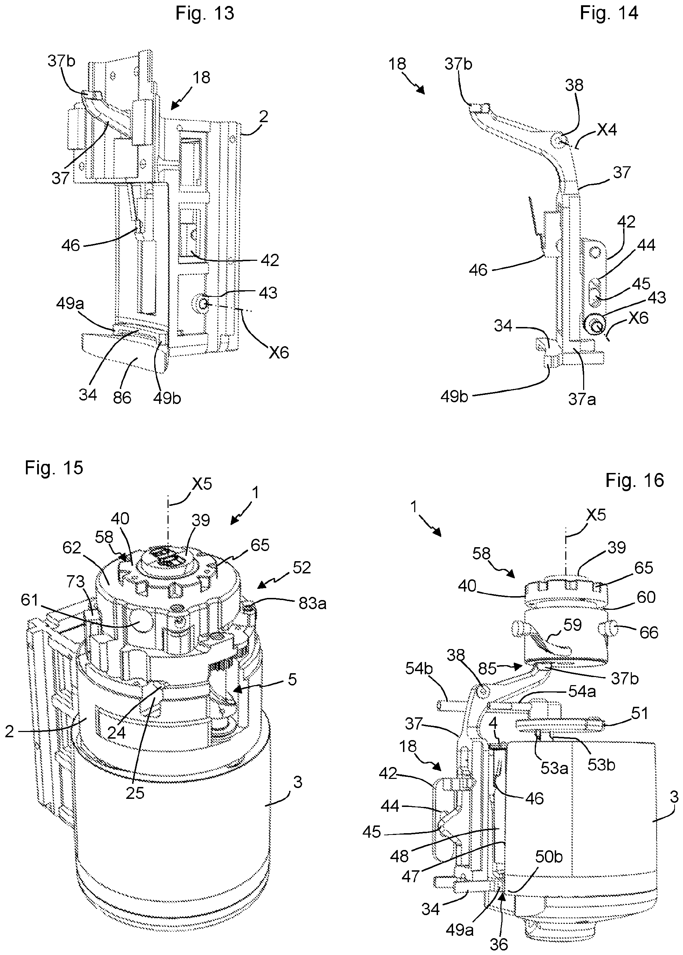

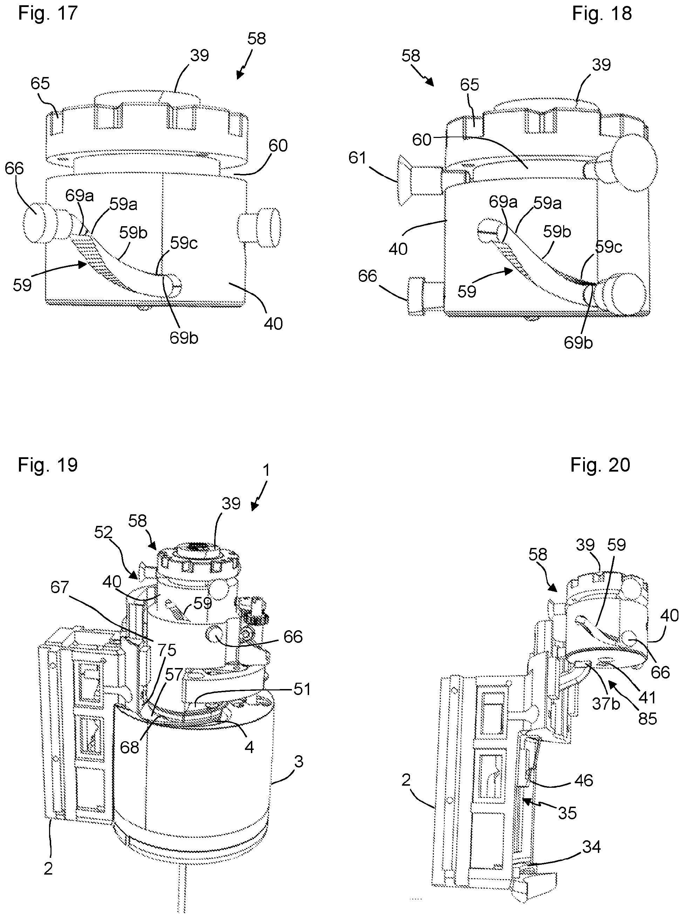

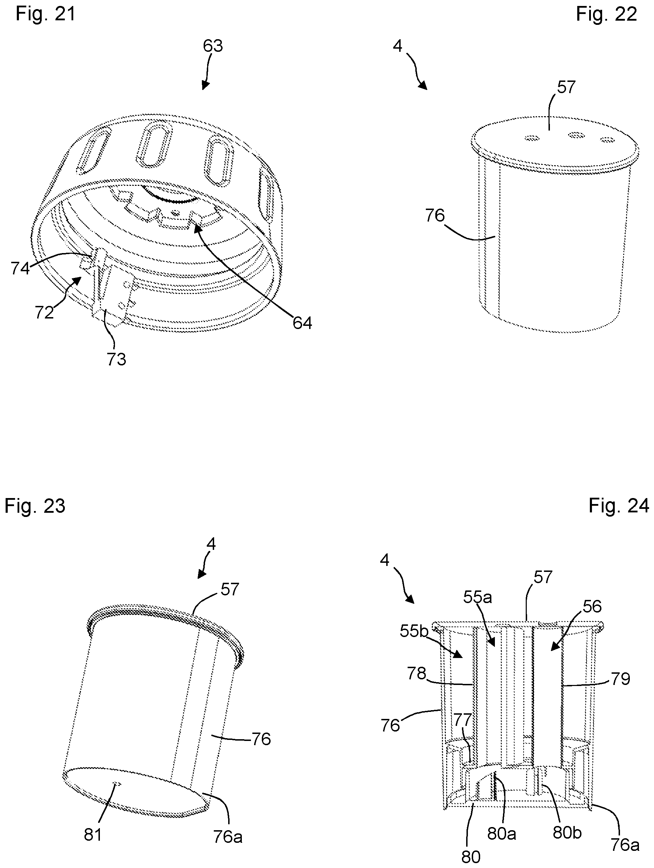

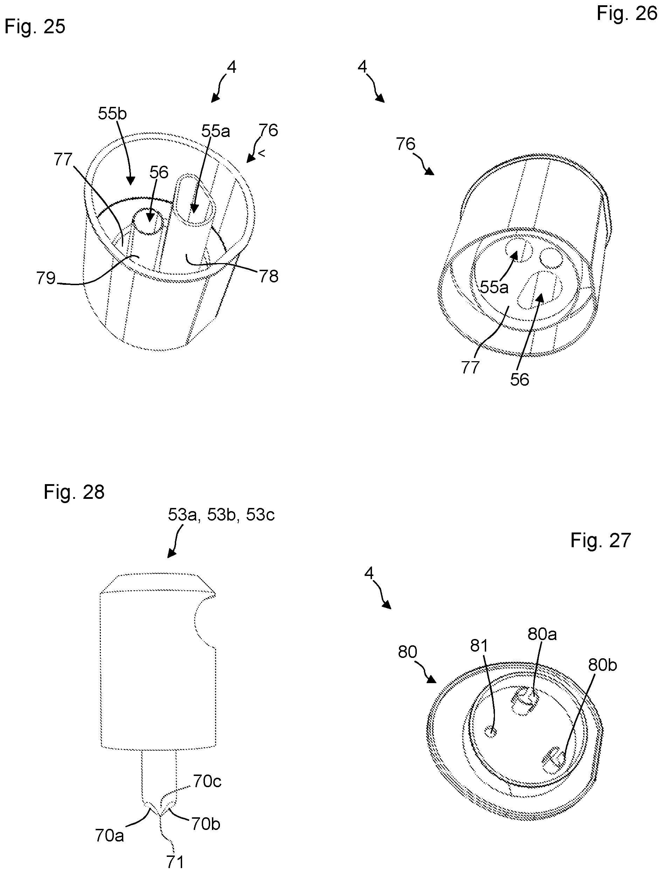

La machine 1 comprend un support d'aiguilles 51 et un système de déplacement 52 du support d'aiguilles 51 d'une position dégagée du pod 4, illustrée en figures 10 et 16, à une position engagée sur le pod 4, illustrée en figure 19. Le support d'aiguilles 51 reçoit trois aiguilles 53a, 53b, 53c connectées à des conduits 54a, 5ab, 54c permettant la distribution de fluides, tel que l'illustrent les figures 7 et 16. Le nombre d'aiguilles et les types de fluides distribués, notamment de l'air ou de l'eau, dépendent de la conception du pod 4. En l'espèce, la machine 1 est configurée pour recevoir un pod 4 qui comprend deux chambres de stockage 55a, 55b contenant chacune un ingrédient (non illustré), et un canal 56 de distribution d'eau, tel qu'illustré en figure 25. Lors du passage de la position dégagée à la position engagée, les aiguilles 53a, 53b, 53c perforent l'opercule 57 du pod 4 illustré en figure 22, et se positionnent respectivement dans les parties supérieures des deux chambres de stockage 55a, 55b et du canal 56.

Le système de déplacement 52 comprend un organe de manœuvre 58 qui comporte le corps 40 précité. Ce corps 40 est muni préférentiellement de trois rampes hélicoïdales 59 uniformément réparties autour de sa paroi cylindrique, pour une meilleure répartition des efforts. Le corps 40 comprend une gorge 60 circulaire qui reçoit trois premiers pions 61 uniformément répartis autour de cette gorge 60 et assujettis à un élément 62 du châssis 2, comme l'illustrent par exemple les figures 15 et 18. Cela permet de monter le corps 40 en liaison pivot selon l'axe vertical X5, vis-à-vis du châssis 2. L'organe de manœuvre 58 comporte également une molette 63 qui comporte une denture femelle 64, illustrée en figure 21, configurée pour coopérer avec une denture mâle 65, illustrée par exemple en figure 15. La rotation de la molette 63 entraîne ainsi celle du corps 40. Le système de déplacement 52 comprend trois seconds pions 66 assujettis à un piston 67 et engagés respectivement dans les trois rampes hélicoïdales 59, tel qu'illustré notamment en figures 11 et 17 à 19. Le piston 67 est assujetti au support d'aiguilles 51 et il est monté en liaison glissière selon l'axe vertical X5. La rotation de la molette 63 entraîne donc celle du corps 40 et, ainsi, le déplacement des rampes hélicoïdales 59 vis-à-vis des seconds pions 66, entraînant alors la translation selon l'axe vertical X5 du piston 67 et du support d'aiguilles 51, vis-à-vis de l'élément 62 du châssis 2. En regard de la forme des rampes hélicoïdales 59 illustrées notamment en figures 17 et 18, une rotation de la molette 63 dans le sens horaire entraîne une translation vers le bas du support d'aiguilles 51, et inversement dans le sens antihoraire.

Tel que l'illustrent les figures 7 et 19, un joint d'étanchéité 68 surfacique est agencé sur la face inférieure du support d'aiguilles 51, lesdites aiguilles 53a, 53b, 53c passant au travers dudit joint d'étanchéité 68. Lorsque le support d'aiguilles 51 est en position engagée sur le pod 4, ce joint d'étanchéité 68 vient convenablement en contact sur la surface de l'opercule 57 du pod 4, ce qui supprime la mise à l'air libre des chambres de stockage 55a, 55b et du canal 56 du pod 4 après perforation de cette opercule 57 par les aiguilles 53a, 53b, 53c et durant l'injection des fluides à l'intérieur dudit pod 4.

Tel qu'illustré notamment en figure 17 et 18, chaque rampe hélicoïdale 59 comporte trois zones de pentes différentes 59a, 59b, 59c. La première zone de pente 59a correspond à une zone d'approche des aiguilles 53a, 53b, 53c au contact de l'opercule 57 du pod 4. Les deux autres zones de pentes 59b, 59c correspondent à deux phases d'une zone de travail où les aiguilles 53a, 53b, 53c sont engagées sur le pod 4. La zone de pente 59b correspond à une première phase de pénétration des aiguilles 53a, 53b, 53c dans l'opercule 57 du pod 4 et la zone de pente 59c correspond à une seconde phase de mise en étanchéité du pod 4 où le joint d'étanchéité 68 sur le support d'aiguilles 51 épouse convenablement l'opercule 57 après sa perforation par lesdites aiguilles 53a, 53b, 53c. Par ailleurs, chaque rampe hélicoïdale 59 comprend deux excroissances 69a, 69b permettant de maintenir le corps 40 en position vis-à-vis du pion 66 dans deux positions extrêmes de rotation, tant qu'une action manuelle n'est pas exercée sur la molette 63. Cela assure un arrêt et un maintien convenable du support d'aiguilles 51 en position engagée et en position dégagée correspondant auxdites positions extrêmes. De préférence, les rampes hélicoïdales 59 sont configurées pour que les pions 66 atteignent les positions extrêmes vis-à-vis du corps 40 en tournant la molette 63 d'un angle compris entre 50° et 90°, de préférence 65°. De préférence, le système de déplacement 52 comprend un ressort (non illustré) agencé entre le piston 67 et l'élément 62 du châssis 2, ce ressort permettant d'assister la descente du piston 67 dans les phases d'approche et de perforation de l'opercule 57 du pod 4.

Les aiguilles 53a, 53b ,53c comportent chacune un affûtage à trois pentes 70a, 70b, 70c permettant de former une pointe 71 à l'extrémité de chaque aiguille, ce qui facilite la perforation de l'opercule 57 avec un couple réduit lors de la rotation de la molette 63. Dans un même but, il est possible de prévoir des longueurs différentes pour les aiguilles 53a, 53b, 53c, ce qui permet de séquencer les entrées en contact desdites aiguilles avec l'opercule 57 du pod 4 et, donc, de séquencer les efforts de perforation dudit opercule. De préférence, les deux aiguilles 53a, 53c excentrées sont de même longueur pour une meilleure stabilité durant la perforation de l'opercule 57.

Tel qu'illustré notamment en figures 7, 15 et 21, la machine 1 comprend un système de détection 72 de la position engagée des aiguilles 53a, 53b, 53c sur l'opercule 57 du pod 4. Ce système de détection 72 comporte un interrupteur 73, de type capteur à lamelle, qui est assujetti à l'élément 62 du châssis 2, et une protubérance 74 agencée à l'intérieur de la molette 63. Le support d'aiguilles 51 atteint la position engagée vis-à-vis du pod 4 en tournant la molette 63 dans le sens horaire jusqu'à ce que les pions 66 dépassent les excroissances 69b sur les rampes hélicoïdales 59, position dans laquelle la protubérance 74 vient en butée contre l'interrupteur 73 et l'active, ce qui permet à la machine 1 de lancer le cycle de distribution des fluides au travers des aiguilles 53a, 53b, 53c en garantissant une parfaite étanchéité entre le support d'aiguilles 51 et le pod 4 et, ainsi, une distribution correcte de la boisson.

En fin de distribution de la boisson, l'utilisateur tourne la molette 63 dans le sens antihoraire jusqu'à ce que les pions 66 dépassent les excroissances 69a sur les rampes hélicoïdales 59, ce qui permet la remontée du piston 67 et du support d'aiguilles 51. Durant cette remontée, le pod 4 pourrait rester collé au support d'aiguilles 51, ce qui pourrait bloquer l'ouverture du réceptacle 3. Afin de garantir le maintien du pod 4 dans la zone de logement 33 du réceptacle 3 durant le dégagement des aiguilles 53a, 53b, 53c, un élément de butée 75 sur le châssis 2 est positionné au-dessus d'une partie de l'opercule 57 du pod 4 dans la position fermée dudit réceptacle 3, comme l'illustre la figure 19.

Tel qu'illustré en figure 22 à 27, le pod 4 comprend un corps 76 comportant une surface intermédiaire 77 et des parois 78, 79 permettant de définir les deux chambres de stockage 55a, 55b et le canal 56.. La surface intermédiaire 77 est recouverte par un film (non représenté sur les figures) de fermeture des deux chambres de stockage 55a, 55b. Le pod 4 comprend également un fond mobile 80 agencé de manière coulissante dans le corps 76, en-dessous de la surface intermédiaire 77. Le fond mobile comprend deux aiguilles 80a, 80b. Durant la mise en place du support d'aiguilles 51 sur l'opercule 57 du pod 4, lorsque les pions 66 se situent dans la zone de travail sur les rampes hélicoïdales 59, le fond mobile 80 coulisse dans le corps 76 du pod 4 jusqu'à atteindre la surface intermédiaire 77. Les aiguilles 80a, 80b perforent le film, ce qui permet l'activation du pod 4 et la constitution d'une chambre de mélange (non illustrée). Cette chambre de mélange communique avec les deux chambres 55a, 55b et le canal 56, ce qui permet de distribuer les ingrédients et l'eau dans cette chambre de mélange lors de la distribution des fluides pour la préparation de la boisson, laquelle s'écoule progressivement au travers d'un orifice de sortie 81 agencé dans le fond mobile 80. D'autres conceptions de pod 4 sont envisageables, le principe de déplacement du support d'aiguilles 51 de la position dégagée à la position engagée sur le pod 4 grâce au système de déplacement 52 précité, restant identique.

Lorsque le réceptacle 3 est ouvert pour la mise en place d'un pod 4 ou le retrait d'un pod 4 usagé, il convient d'éviter tout déplacement du support d'aiguilles 51 vers la position engagée, afin que le réceptacle 3 ne vienne pas heurter le support d'aiguilles 51 lors de la fermeture suivante, ce qui pourrait endommager la machine 1. Pour cela, la machine 1 comprend un système de blocage 82 du système de déplacement 52, illustré en regard des figures 3, 7, 11 et 15. Le système de blocage 82 comprend une pièce de blocage 83 montée en liaison glissière vis-à-vis de l'élément 62 du châssis 2 de sorte à coulisser d'une position escamotée illustrée en figure 15 où la tête 83a de la pièce de blocage 83 est logée dans l'élément 62 du châssis2, à une position active illustrée en figures 3 et 7 où la tête 83a de la pièce de blocage 83 dépasse de l'élément 62 du châssis 2 et vient s'engager dans un orifice 84 agencé dans le fond de la molette 63, ce qui bloque la rotation de cette molette 63, empêchant alors l'activation du système de déplacement 52 qui maintient le support d'aiguilles 51 en position dégagée. La translation de la pièce de blocage 83 est obtenue grâce à une rainure circulaire 89 agencée sur le réceptacle 3, cette rainure circulaire 89 comprenant un fond incurvé 90 dans lequel vient se loger un pied 91 agencé à l'extrémité inférieure 83b de la pièce de blocage 83. Lorsque le réceptacle 3 est pivoté en position fermée, le pied 91 est logé dans le creux du fond incurvé 90, en partie centrale de la rainure circulaire 89, comme illustré en figures 10 et 11, position dans laquelle la tête 83a de la pièce de blocage est dégagée de l'orifice 84. Au contraire, lorsque le réceptacle 3 est en position ouverte par un pivotement dans le sens horaire ou antihoraire, le pied 90 est situé sur l'un des bords 89a, 89b de la rainure circulaire 89, dans la partie la moins profonde du fond incurvée 90, position dans laquelle la tête 83a est engagée dans l'orifice 84.

Lorsque le support d'aiguilles 51 est engagé sur le pod 4 pour la distribution d'une boisson, il convient d'éviter toute possibilité d'ouverture du réceptacle 3, ce qui pourrait également endommager la machine 1. A cet effet, la machine 1 comprend un système de désactivation 85 du système de verrouillage/déverrouillage 18 empêchant le dégagement du verrou 34 hors du logement 36 sur le réceptacle 3. Ce système de désactivation 85 est mise en œuvre au moyen du bouton de commande 39 monté en liaison glissière vis-à-vis du corps 40 de l'organe de manœuvre 58, ledit corps étant monté rotatif selon l'axe vertical X5. Le doigt 41 sur le bouton de commande 39 est désaxé par rapport à l'axe vertical X5. Lorsque la molette 63 est dans une position selon laquelle les pions 66 sont disposés en butée dans les rampes hélicoïdales 59, au niveau des excroissances 69a, le support d'aiguilles 51 est dégagé du pod 4 et le doigt 41 correspond avec l'extrémité supérieure 37b de la bielle 37, tel qu'illustré en figures 8, 9 et 16, ce qui permet le déverrouillage du verrou 34 en appuyant sur le bouton de commande 39, pour l'ouverture du réceptacle 3. Dès que la molette 63 est tournée et que les pions 66 quittent les excroissances 69a pour se déplacer dans la zone d'approche et dans la zone de travail sur les rampes hélicoïdales 59, le doigt 41 se dégage de l'extrémité supérieure 37b de la bielle 37, ce qui empêche l'activation de la bielle 37 et le dégagement du verrou 34 lorsque l'on appuie sur le bouton de commande 39.

Tel qu'illustré notamment sur les figures 1 à 4, le châssis 2 de la machine 1 comprend une patte d'appui 86 en forme de portion cylindrique. La partie inférieure 3a du réceptacle 3 comporte deux épaulements 87a, 87b qui viennent se positionner au-dessus de la patte d'appui 86 lorsque ledit réceptacle 3 est en position fermée. Lors d'un déplacement du support d'aiguilles 51 de la position dégagée vers la position engagée sur le pod 4, ces deux épaulements 87a, 87b prennent appui sur la patte d'appui 86, ce qui assure une reprise des efforts durant l'engagement du support d'aiguilles 51 sur le pod 4.

Tel qu'illustré notamment sur les figures 2 et 3, le réceptacle 3 comprend deux évidements 88a, 88b disposés de chaque côté de la zone de réception 33 du pod 4, ce qui facilite la mise en place du pod 4 dans ladite zone de réception 33, et inversement son retrait. Dans le même but, la fente 47 facilite également la manipulation du pod 4 lors de son positionnement dans le réceptacle 3 ou de son retrait de celui-ci.

Le réceptacle 3 comprend également une pièce de support (non illustrée) recevant le pod 4, cette pièce de support étant configurée pour être logée de manière amovible dans la zone de réception 33, afin de permettre son retrait et de faciliter le nettoyage dudit réceptacle 3.

La machine 1 comprend également un système de lecture (non illustré), par exemple un lecteur de code-barres, qui est agencé sur le châssis 2 ou sur la seconde bielle 42, de sorte à être positionné en regard de la fente 47 sur le réceptacle 3 disposé en position fermée et à permettre la lecture d'un code graphique agencé sur la partie du contour 48 du pod 4 apparaissant au niveau de la fente 47. Cela permet à la machine 1 de reconnaître le type de pod 4 disposé dans le réceptacle 3 et la boisson à préparer, afin de commander la distribution des fluides en conséquence. Lorsque le capteur de présence 46 indique la présence d'un pod 4 dans le réceptacle 3 en position fermée, que l'interrupteur 73 indique que le support d'aiguilles 51 est en position engagée sur le pod 4, et que le système de lecture a reconnu le type de pod 4 disposé dans le réceptacle, le système de gestion de l'activation (non illustré) de la machine 1 commande le dispositif de distribution de fluides afin de délivrer les quantités de fluides nécessaires à la préparation de la boisson. Ce système de lecture peut également remplir la fonction du capteur de présence 46, puisque la lecture du code graphique indique systématiquement la présence d'un pod 4 dans la zone de réception 33 du réceptacle 3.

La description qui précède n'a aucun caractère limitatif, de nombreuses variantes pouvant être envisagées sans sortir du cadre de l'invention. On pourra par exemple prévoir des variantes de mise en œuvre du système de déplacement 52 du support d'aiguilles 51. Par exemple, on peut prévoir une inversion du sens des rampes 59 sur le corps 40 de l'organe de manœuvre 58, pour le déplacement du support d'aiguilles 51 de la position dégagée vers la position engagée sur le pod 4, et inversement. Dans ce cas, le sens de rotation de la molette 63 sera inversé.
On peut également prévoir des aiguilles 53a, 53b, 53c de longueurs identiques et entrant en contact simultanément avec l'opercule 57 du pod 4.

On peut aussi prévoir un nombre d'aiguilles différent, selon le type de pod 4 pouvant être utilisé pour la préparation de boissons.

Dans un mode de réalisation, la machine 1 permet la préparation de boissons froides. On peut cependant envisager des variantes de réalisation pour la préparation de boissons chaudes, la machine 1 étant dans ce cas équipée d'un dispositif de production d'eau chaude chauffant l'eau préalablement à sa distribution.

## Revendications

1. Machine (1) de distribution de boissons à partir d'un pod (4), comprenant un châssis (2), un réceptacle (3) comportant une zone de réception (33) du pod, et un dispositif d'ouverture/fermeture (5) agencé entre le châssis et le réceptacle pour pivoter le réceptacle selon un axe vertical (X1), entre une position fermée permettant la distribution de boisson et une position ouverte permettant l'accès à la zone de réception du pod, **caractérisée en ce que** le dispositif d'ouverture/fermeture est configuré pour que le réceptacle comporte une course angulaire de 180° pour passer de la position fermée à la position ouverte et inversement, le sens de la rotation pouvant être horaire ou antihoraire, au choix de l'utilisateur.

2. Machine (1) selon la revendication 1, dans laquelle le dispositif d'ouverture/fermeture (5) comprend un système d'orientation (6) de l'ouverture du réceptacle (3) configuré pour ouvrir le réceptacle dans le sens inverse de celui de la fermeture qui précède.

3. Machine (1) selon la revendication 2, dans laquelle le système d'orientation (6) est configuré pour arrêter le pivotement du réceptacle (3) lorsqu'il atteint la position fermée, ledit système d'orientation comportant une butée (9, 10, 14) agencée sur le châssis (2) et un organe d'arrêt (12, 13) agencé sur le réceptacle.

4. Machine (1) selon la revendication 3, dans laquelle l'organe d'arrêt du réceptacle comporte une nervure verticale (13) agencée sur un axe (12) de rotation du réceptacle (3).

5. Machine (1) selon l'une des revendications 3 ou 4, dans laquelle la butée est formée par un nez (14) d'une gâchette (9) mobile en rotation de part et d'autre d'une position moyenne à l'encontre de deux ressorts (15a, 15b).

6. Machine (1) selon l'une des revendications précédentes, dans laquelle le dispositif d'ouverture/fermeture (5) comprend un système d'assistance (7) à l'ouverture configuré pour amener le réceptacle (3) de la position fermée à la position ouverte.

7. Machine (1) selon la revendication 6, dans laquelle le système d'assistance (7) à l'ouverture comporte un organe d'appui (23) qui coopère avec une platine (19) assujettie au réceptacle selon l'axe vertical (X1), ladite platine comprenant au moins une rampe (20a, 20b) sur laquelle prend appui ledit organe d'appui, de sorte que l'effort exercé par l'organe d'appui sur l'au moins une rampe entraîne la rotation de la platine dans au moins un sens selon l'axe vertical.

8. Machine (1) selon la revendication 7, dans laquelle l'organe d'appui (23) coopère avec un logement (22) agencé sur la platine (19) pour maintenir le réceptacle (3) en position ouverte.

9. Machine (1) selon l'une des revendications 7 ou 8, dans laquelle l'organe d'appui (23) comporte un galet (27).

10. Machine (1) selon l'une des revendications précédentes, laquelle comporte un système de verrouillage/déverrouillage (18) configuré pour maintenir le réceptacle (3) en position fermée vis-à-vis du châssis (2) et, inversement, pour libérer le réceptacle de sorte à permettre son pivotement en position ouverte.

11. Machine (1) selon la revendication 10, dans laquelle le système de verrouillage/déverrouillage (18) comporte, sur le châssis (2), un verrou (34) mobile et des moyens de commande (35) du verrou et, sur le réceptacle (3), un logement (36) configuré pour recevoir le verrou dans la position fermée.

12. Machine (1) selon la revendication 11, dans laquelle les moyens de commande (35) comportent une bielle (37) assujettie au verrou (34), un bouton de commande (39) de la bielle et un élément de rappel du verrou en position de maintien du réceptacle (3).

13. Machine (1) selon l'une des revendications 10 à 12, laquelle comprend un système d'impulsion (9, 10, 13, 15a, 15b) configuré pour forcer le pivotement du réceptacle (3) lorsqu'il est libéré par le système de verrouillage/déverrouillage (18).

14. Machine (1) selon l'une des revendications précédentes, laquelle comprend un système de détection (37, 42, 46) configuré pour détecter la présence d'un pod (4) dans le réceptacle (3) lorsque ledit réceptacle est en position fermée.

15. Machine (1) selon la revendication 14, dans laquelle le réceptacle (3) comporte une fente (47) verticale communiquant avec la zone de réception (33) du pod (4), le système de détection comportant un capteur de présence (46) et des moyens de déplacement (37, 42) du capteur de présence, dans une position dégagée de la fente lors de l'amorce de l'ouverture ou de la fermeture du réceptacle, ou dans une position engagée dans la fente.

16. Machine (1) selon l'une des revendications précédentes, laquelle comprend des moyens de reprise des efforts (86, 87a, 87b) agencés entre le châssis (2) et le réceptacle (3), configurés pour stabiliser le réceptacle en cours de fonctionnement de la machine.

17. Machine (1) selon la revendication 16, dans laquelle les moyens de reprise des efforts comprennent au moins un épaulement (87a, 87b) sur le réceptacle (3) et au moins une patte d'appui (86) sur le châssis (2), ledit épaulement reposant sur ladite patte d'appui dans la position fermée.

18. Machine (1) selon l'une des revendications précédentes, dans laquelle le réceptacle (3) comprend des moyens de préhension (47, 88a, 88b) du pod (4) en position dans la zone de réception (33).

19. Machine (1) selon l'une des revendications précédentes, dans laquelle le réceptacle (3) comprend une pièce de support du pod (4) configurée pour être positionnée dans la zone de réception (33) et pour recevoir ledit pod, ladite pièce de support étant amovible.

20. Machine (1) selon l'une des revendications précédentes, laquelle comprend un support d'aiguilles (51) de distribution de fluides, un système de déplacement (52) du support d'aiguilles d'une position dégagée du pod (4) à une position engagée dans le pod, et un système de blocage (82) du système de déplacement configuré pour maintenir le support d'aiguilles en position dégagée du pod tant que le réceptacle (3) n'est pas revenu en position fermée.

## Patentansprüche

1. Maschine (1) zum Ausgeben von Getränken ausgehend von einem Pod (4), umfassend einen Rahmen (2), einen Behälter (3), der einen Bereich zur Aufnahme (33) des Pods und eine Öffnungs-/Schließvorrichtung (5) aufweist, die zwischen dem Rahmen und dem Behälter angeordnet ist, um den Behälter um eine vertikalen Achse (X1) zwischen einer geschlossenen Position, die das Ausgeben von Getränken ermöglicht, und einer offenen Position zu schwenken, die den Zugang zu dem Bereich zur Aufnahme des Pods ermöglicht, **dadurch gekennzeichnet, dass** die Öffnungs-/Schließvorrichtung so konfiguriert ist, dass der Behälter einen Winkelbeweglichkeit von 180° aufweist, um sich von der geschlossenen Position in die geöffnete Position zu bewegen und umgekehrt, wobei die Drehrichtung im Uhrzeigersinn oder gegen den Uhrzeigersinn nach Wahl des Benutzers sein kann.

2. Maschine (1) nach Anspruch 1, wobei die Öffnungs-/Schließvorrichtung (5) ein System (6) zum Ausrichten der Öffnung des Behälters (3) umfasst, das konfiguriert ist, um den Behälter in der Richtung, die zu derjenigen des vorhergehenden Schließens entgegengesetzt ist, zu öffnen.

3. Maschine (1) nach Anspruch 2, wobei das Ausrichtungssystem (6) konfiguriert ist, um das Schwenken des Behälters (3) zu stoppen, wenn er die geschlossene Position erreicht, wobei das Ausrichtungssystem einen Anschlag (9, 10, 14), der an dem Rahmen (2) angeordnet ist, und ein Stoppelement (12, 13) aufweist, das an dem Behälter angeordnet ist.

4. Maschine (1) nach Anspruch 3, wobei das Stoppelement des Behälters eine vertikale Rippe (13) aufweist, die auf einer Drehachse (12) des Behälters (3) angeordnet ist.

5. Maschine (1) nach einem der Ansprüche 3 oder 4, wobei der Anschlag durch eine Nase (14) eines Abzuges (9) gebildet ist, der auf beiden Seiten von einer Mittelstellung gegen zwei Federn (15a, 15b) drehbar ist.

6. Maschine (1) nach einem der vorhergehenden Ansprüche, wobei die Öffnungs-/Schließvorrichtung (5) ein System zur Unterstützung (7) beim Öffnen aufweist, das konfiguriert ist, den Behälter (3) aus der Schließstellung in die offene Position zu bringen.

7. Maschine (1) nach Anspruch 6, wobei das System zur Unterstützung (7) beim Öffnen ein Auflageelement (23) aufweist, das mit einer Platte (19) zusammenwirkt, die an dem Behälter entlang der vertikalen Achse (X1) befestigt ist, wobei die Platte mindestens eine Rampe (20a, 20b) umfasst, an der das Auflageelement anliegt, so dass die von dem Auflageelement auf die mindestens eine Rampe ausgeübte Kraft eine Drehung der Platte in mindestens einer Richtung um die vertikale Achse bewirkt.

8. Maschine (1) nach Anspruch 7, wobei das Auflageelement (23) mit einem Gehäuse (22) zusammenwirkt, das an der Platte (19) angeordnet ist, um den Behälter (3) in der offenen Position zu halten.

9. Maschine (1) nach einem der Ansprüche 7 oder 8, wobei das Auflageelement (23) eine Rolle (27) aufweist.

10. Maschine (1) nach einem der vorhergehenden Ansprüche, die ein System zur Verriegelung/Entriegelung (18) aufweist, das konfiguriert ist, um den Behälter (3) in einer geschlossenen Position gegenüber dem Rahmen (2) zu halten und umgekehrt den Behälter freizugeben, um sein Schwenken in die offene Position zu ermöglichen.

11. Maschine (1) nach Anspruch 10, wobei das System zur Verriegelung/Entriegelung (18) an dem Rahmen (2) einen beweglichen Riegel (34), und Mittel zum Steuern (35) des Riegels und an dem Behälter (3) ein Gehäuse (36) aufweist, das konfiguriert ist, um den Riegel in der geschlossenen Position aufzunehmen.

12. Maschine (1) nach Anspruch 11, wobei die Steuermittel (35) eine an dem Riegel (34) befestigte Verbindungsstange (37), einen Steuerknopf (39) der Verbindungsstange und ein Element zur Rückstellung des Riegels in die Halteposition des Behälters (3) umfassen.

13. Maschine (1) nach einem der Ansprüche 10 bis 12, die ein Impulssystem (9, 10, 13, 15a, 15b) umfasst, das konfiguriert ist, um das Schwenken des Behälters (3) zu erzwingen, wenn er von dem System zur Verriegelung/Entriegelung (18) freigegeben ist.

14. Maschine (1) nach einem der vorhergehenden Ansprüche, die ein Erfassungssystem (37, 42, 46) umfasst, das konfiguriert ist, das Vorhandensein eines Pods (4) in dem Behälter (3) zu erfassen, wenn sich der Behälter in der geschlossenen Position befindet.

15. Maschine (1) nach Anspruch 14, wobei der Behälter (3) einen vertikalen Schlitz (47) aufweist, der mit dem Bereich zur Aufnahme (33) des Pods (4) in Verbindung steht, wobei das Erfassungssystem einen Anwesenheitssensor (46) und Mittel zur Verschiebung (37, 42) des Anwesenheitssensors in einer aus dem Schlitz gelösten Position während des Beginns des Öffnens oder Schließens des Behälters der in einer in den Schlitz eingegriffenen Position aufweist.

16. Maschine (1) nach einem der vorhergehenden Ansprüche, die Kraftaufnahmemittel (86, 87a, 87b) umfasst, die zwischen dem Rahmen (2) und dem Behälter (3) angeordnet sind und so konfiguriert sind, dass sie den Behälter während des Betriebs der Maschine stabilisieren.

17. Maschine (1) nach Anspruch 16, wobei die Kraftaufnahmemittel mindestens eine Schulter (87a, 87b) an dem Behälter (3) und mindestens eine Auflagelasche (86) an dem Rahmen (2) umfasse, wobei die Schulter in der geschlossenen Position auf der Auflagelasche aufliegt.

18. Maschine (1) nach einem der vorhergehenden Ansprüche, wobei der Behälter (3) Mittel zum Greifen (47, 88a, 88b) des Pods in Position in dem Bereich zur Aufnahme (33) umfasst.

19. Maschine (1) nach einem der vorhergehenden Ansprüche, wobei der Behälter (3) ein Teil zum Halten des Pods (4) umfasst, das so konfiguriert ist, dass es in dem Bereich zur Aufnahme (33) positioniert ist und den Pod aufnimmt, wobei das Teil zum Halten entfernbar ist.

20. Maschine (1) nach einem der vorhergehenden Ansprüche, wobei sie einen Halter von Nadeln (51) zur Abgabe von Flüssigkeiten, ein System zur Verschiebung (52) des Halters von Nadeln aus einer von den Pod (4) gelösten Position zu einer in den Pod eingegriffenen Position und ein Verriegelungssystem (82) des Systems zur Verschiebung umfasst, das konfiguriert ist, um den Halter von Nadeln in der von den Pod (4) gelösten Position zu halten, solange der Behälter (3) nicht in die geschlossene Position zurückgekehrt ist.

## Claims

1. Machine (1) for dispensing beverages from a pod (4), comprising a frame (2), a container (3) comprising a pod-receiving zone (33), and an opening/closing device (5) arranged between the frame and the container so as to pivot the container relative to a vertical axis (X1), between a closed beverage-dispensing position and an open position providing access to the pod-receiving zone, **characterised in that** the opening/closing device is designed such that the container has a 180° angular stroke for moving from the closed position into the open position and vice versa, with the direction of rotation able to be clockwise or anti-clockwise, as chosen by the user.

2. Machine (1) according to claim 1, wherein the opening/closing device (5) comprises an orientation system (6) of the opening of the container (3) configured to open the container in the direction opposite that of the preceding closing.

3. Machine (1) according to claim 2, wherein the orientation system (6) is configured to stop the pivoting of the container (3) when it reaches the closed position, said orientation system comprising a stop (9, 10, 14) arranged on the frame (2) and a stop member (12, 13) arranged on the container.

4. Machine (1) according to claim 3, wherein the stop member of the container comprises a vertical rib (13) arranged on an axis (12) of rotation of the container (3).

5. Machine (1) according to any of claims 3 or 4, wherein the stop is formed by a nose (14) of a trigger (9) mobile in rotation on either side of an average position against two springs (15a, 15b).

6. Machine (1) according to any of the preceding claims, wherein the opening/closing device (5) comprises a system of assistance (7) for opening configured to bring the container (3) from the closed position to the open position.

7. Machine (1) according to claim 6, wherein the system of assistance (7) for opening comprises a bearing member (23) that cooperate with a plate (19) secured to the container along the vertical axis (X1), with said plate comprising at least one ramp (20a, 20b) against which said bearing member bears, in such a way that the force exerted by the bearing member on the at least one ramp drives the rotation of the plate in at least one direction along the vertical axis.

8. Machine (1) according to claim 7, wherein the bearing member (23) cooperates with a housing (22) arranged on the plate (19) to maintain the container (3) in the open position.

9. Machine (1) according to any of claims 7 or 8, wherein the bearing member (23) comprises a roller (27).

10. Machine (1) according to any of the preceding claims, which comprises a locking/unlocking system (18) configured to maintain the container (3) in the closed position with regards to the frame (2) and, vice versa, to release the container in such a way as to allow the pivoting thereof into the open position.

11. Machine (1) according to claim 10, wherein the locking/unlocking system (18) comprises, on the frame (2), a mobile lock (34) and means for controlling (35) the lock, on the container (3), a housing (36) configured to receive the lock in the closed position.

12. Machine (1) according to claim 11, wherein the means for controlling (35) comprise a connecting rod (37) secured to the lock (34), a button, for controlling (39) the connecting rod and an element for returning the lock in the position for maintaining the container (3).

13. Machine (1) according to any of claims 10 to 12, which comprises a pulse system (9, 10, 13, 15a, 15b) configured to force the pivoting of the container (3) when it is released by the locking/unlocking system (18).

14. Machine (1) according to any of the preceding claims, which comprises a detection system (37, 42, 46) configured to detect the presence of a pod (4) in the container (3) when said container is in the closed position.

15. Machine (1) according to claim 14, wherein the container (3) comprises a vertical slot (47) that communicates with the pod (4)-receiving zone (33), with the detection system comprising a presence sensor (46) and means for displacing (37, 42) the presence sensor, in a released position of the slot during the initiation of the opening or of the closing off the container, or in a position engaged in the slot.

16. Machine (1) according to any of the preceding claims, which comprises means for taking up the forces (86, 87a, 87b) arranged between the frame (2) and the container (3), configured to stabilise the container during the operation of the machine.

17. Machine (1) according to claim 16, wherein the means for taking up forces comprise at least one shoulder (87a, 87b) on the container (3) and at least one bearing ear (86) on the frame (2), said shoulder resting on said bearing ear in the closed position.

18. Machine (1) according to any of the preceding claims, wherein the container (3) comprises means for grasping (47, 88a, 88b) the pod (4) in position in the receiving zone (33).

19. Machine (1) according to any of the preceding claims, wherein the container (3) comprises a part for supporting the pod (4) configured to be positioned in the receiving zone (33) and for receiving said pod, said supporting part being removable.

20. Machine (1) according to any of the preceding claims, which comprises a support for needles (51) for the distribution of fluids, a system for displacing (52) the support for needles from a released position of the pod (4) to an engaged position in the pod, and a system for blocking (82) the system for displacing configured to maintain the support for needles in the released position of the pod as long as the container (3) has not returned to the closed position.
